(19) Europäisches Patentamt
European Patent Office
Office européen des brevets

(11) Veröffentlichungsnummer: **0 089 489**
**B1**

# (12) EUROPÄISCHE PATENTSCHRIFT

(45) Veröffentlichungstag der Patentschrift: **13.11.85**

(51) Int. Cl.⁴: **C 09 D 5/44**, C 09 D 3/58, C 25 D 13/06

(21) Anmeldenummer: **83101422.0**

(22) Anmeldetag: **15.02.83**

(54) **Wasserdispergierbare Bindemittel für kationische Elektrotauchlacke und Verfahren zu ihrer Herstellung.**

(30) Priorität: **20.03.82 DE 3210307**

(43) Veröffentlichungstag der Anmeldung: **28.09.83 Patentblatt 83/39**

(45) Bekanntmachung des Hinweises auf die Patenterteilung: **13.11.85 Patentblatt 85/46**

(84) Benannte Vertragsstaaten: **AT BE CH DE FR GB IT LI NL SE**

(56) Entgegenhaltungen: **DE - A - 3 108 073**

(73) Patentinhaber: **BASF Farben + Fasern Aktiengesellschaft, Am Neumarkt 30, D-2000 Hamburg 70 (DE)**

(72) Erfinder: **Batzill, Wolfgang, Dr. Dipl.-Chem., Emil-Nolde-Weg 93, D-4400 Münster (DE)**
Erfinder: **Diefenbach, Horst, Dr. Dipl.-Chem., Am Lerchenhain 8, D-4405 Nottuln (DE)**
Erfinder: **Geist, Michael, Dr. Dipl.-Chem., Rubensstrasse 251, D-4400 Münster (DE)**
Erfinder: **Schupp, Eberhard, Dr. Dipl.-Chem., Tilsiterweg 4, D-6830 Schwetzingen (DE)**

(74) Vertreter: **Habbel, Hans-Georg, Dipl.-Ing., Postfach 3429 Am Kanonengraben 11, D-4400 Münster (DE)**

EP 0 089 489 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft wasserdispergierbare Bindemittel für kationische Elektrotauchlacke auf der Basis von Umsetzungsprodukten von modifizierten Epoxidharzen und primären und/oder sekundären Aminen sowie Ammoniumsalzen, die gegebenenfalls Vernetzungsmittel, Pigmente, Verlaufmittel und andere übliche Hilfsmittel enthalten.

Kationische wasserdispergierbare Kunstharze als Bindemittel für Elektrotauchlacke sind bekannt. So beschreibt z. B. die DE-OS 2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d. h. die mit ihnen beschichteten Gegenstände erhalten eine zusätzliche Decklackschicht.

Nachteilig können jedoch mit den bisher bekannten Harzen nur Beschichtungen mit relativ geringer Schichtdicke erreicht werden. So werden in der DE-OS 2 701 002 erreichbare Schichtdicken von nur 11,4—18 µm angegeben. Wenn an eine Lackierung besonders hohe Anforderungen hinsichtlich der Korrosionsbeständigkeit und der Oberflächengüte gestellt werden, wie es z. B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, daß bei diesem Verfahren größere Schichtdicken erreicht werden können. Wie bereits oben ausgeführt, ist das mit den bisher bekannten kationischen Kunstharzen jedoch nicht möglich. Die Probleme ergeben sich daraus, daß bei einer Erhöhung der Abscheidespannung über die Durchbruchspannung hinaus Oberflächenstörungen im Film durch Aufreißen der Schicht auftreten. Die Verlängerung der Beschichtungszeit ergibt ebenfalls eine Steigerung der Schichtdicke, doch läßt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Gemäß dem Vorschlag der Patentanmeldung EP-A-59 895 werden nun bei der Elektrotauchlackierung größere Schichtdicken erzielt, wenn Bindemittel auf Basis von modifizierten Epoxidharzen verwendet werden, die aromatische und aliphatische bzw. alicyclische Gruppen in bestimmten Verhältnissen enthalten. Diese Bindemittel sind aufgebaut aus Epoxidharzen, polyfunktionellen Alkoholen und einer solubilisierenden Komponente.

Es wurde nun gefunden, daß verbesserte Bindemittel erhalten werden, wenn zu ihrer Herstellung als polyfunktionelle Alkohole ein- oder mehrkernige Phenole mit mindestens zwei phenolischen Hydroxylgruppen und mindestens einer $\alpha, \beta$-olefinisch ungesättigten Amidomethylgruppe als Substituenten an dem oder den aromatischen Ringen verwendet werden.

Gegenstand der Erfindung sind daher Bindemittel der eingangs genannten Art, die dadurch gekennzeichnet sind, daß als Umsetzungsprodukte solche enthalten sind, die hergestellt worden sind durch Umsetzung von

(A) niedermolekularen, aromatische Gruppen enthaltenden Epoxidharzen mit einem Epoxidäquivalentgewicht unter 374 mit
(B) aliphatischen und/oder alicyclischen polyfunktionellen Alkoholen oder Carbonsäuren mit einem Molekulargewicht unter 350 unter Addition an die Epoxidgruppe derart, daß die Umsetzungsprodukte einen Anteil an aromatischen Gruppen, berechnet als Phenylgruppe, von 10—45% enthalten und endständige Epoxidgruppen aufweisen,
(C) weitere Umsetzung der Epoxidgruppen unter Kettenverlängerung mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

$$-CH_2-NH-\overset{\overset{\displaystyle O}{\|}}{C}-CR^1=CHR^2 \qquad (I)$$

als Substituenten an dem oder den aromatischen Ringen, in der $R^1$ und $R^2$ untereinander gleich oder verschieden sind und für Wasserstoff oder eine Methylgruppe stehen und
(D) weitere Umsetzung des aus (A), (B) und (C) erhaltenen Zwischenproduktes mit einem primären oder sekundären Amin oder einem Ammoniumsalz.

Vorteilhaft ist das Zwischenprodukt aus (A) und (B) mit (C) in einem solchen Molverhältnis umgesetzt worden, daß das resultierende Umsetzungsprodukt endständige Epoxidgruppen aufwies, und daß das Amin oder Ammoniumsalz (D) an diese Epoxidgruppen angelagert wurde.

Bei einer anderen vorteilhaften Ausgestaltung der Erfindung sind gegebenenfalls vorhandene Epoxidgruppen des Umsetzungsproduktes aus (A), (B) und (C) durch Umsetzung geöffnet worden, und das Amin (D) ist an einen Teil der aus der Komponente (C) stammenden Doppelbindungen addiert worden.

Die Öffnung der Epoxidgruppen erfolgt vorteilhaft durch Umsetzung mit einer Carbonsäure, einem Alkohol, einem Thioalkohol oder einem Phenol.

Für die Komponente A — niedermolekulare, aromatische Gruppen enthaltende Epoxidharze mit einem Epoxidäquivalentgewicht unter 375 — sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400—500. Die Polyepoxide können zum Beispiel Polyglycidylether von Polyphenolen sein, wie Bisphenole, vorteilhaft z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4-Dihydroxybenzophenon, Bis(4-hydroxyphenyl)-1,1-ethan, Bis(4-hydroxyphenyl)-1,1-isobutan, Bis(4-hydroxy-tertiär-butylphenyl)-2,2-propan, Bis(2-hydroxynaphthyl-methan, 1,5-Dihydroxynaphthalin und Hydantoinepoxide.

Eine andere geeignete Klasse von Polyepoxiden sind Polyglycidylether von phenolischen Novolakharzen.

Vorteilhaft können auch Polyglycidiylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel:

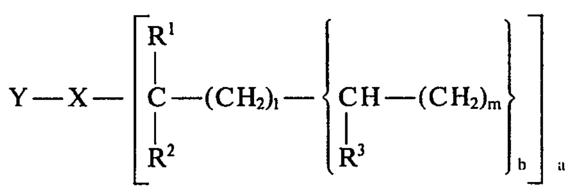

Hierin bedeuten

Y = OH, COOH
X = $(CH_2)_n$

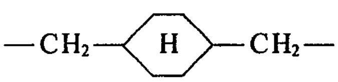

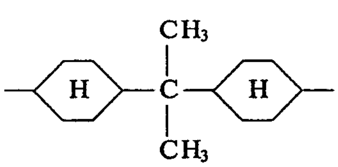

$R^1$, $R^2$, $R^3$ = H, Alkylrest mit 1 bis 5 C-Atomen
a = 0; 1
b = 0; 1
l = 0—10
m,n = 1—10

Als Beispiele seien genannt: Diole, wie

Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentadiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat,

2,2-Dimethyl-3-hydroxypropyl-2,2-dimethylhydroxypropionat, 2-Methyl-2-propyl-3-hydroxypropyl-2-methyl-2-propylhydroxypropionat,4,4'-Methylenbiscyclohexanol und 4,4'-Isopropylidenbiscyclohexanol.

Einige bevorzugte Diole sind

2,2-Dimethyl-1,3-propandiol, 3-Methyl-1,5-pentandiol, 2,2-Dimethyl-3-hydroxypropyl-2,2-dimethylhydroxypropionat und .4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z. B. 2,2-Dimethylmalonsäure und Hexahydrophthalsäure.

Wesentlich ist es, daß die Verbindungen der Komponente B in einem solchen Verhältnis mit der Komponente A umgesetzt werden, daß das Umsetzungsprodukt den angegebenen Gehalt an aromatischen Gruppen, berechnet als Phenylengruppe, von 10—45% aufweist.

Das Umsetzungsprodukt aus (A) und (B) wird weiter mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

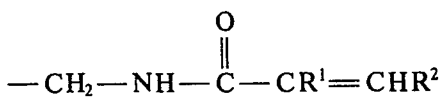

(I)

als Substituenten an dem oder den aromatischen Ringen, in der $R^1$ und $R^2$ untereinander gleich oder verschieden sind und für Wasserstoff oder eine Methylgruppe stehen, umgesetzt.

Bezüglich der Komponente (C) der erfindungsgemäßen Bindemittel ist im einzelnen folgendes auszuführen:

Die $\alpha,\beta$-olefinisch ungesättigte Amidomethylgruppen tragenden Mono- und/oder Polyphenole tragen als Substituent am aromatischen Kern Gruppen der allgemeinen Formel

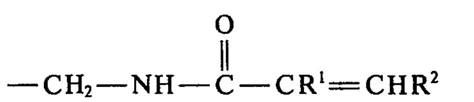

(I)

wobei $R^1$ und $R^2$ gleiche oder verschiedene Reste bedeuten und für Wasserstoff oder eine Methylgruppe stehen. Bevorzugt sind Gruppen der Formel (I), bei denen $R^1$ Wasserstoff oder eine Methylgruppe und $R^2$ Wasserstoff bedeuten. Hergestellt werden können diese $\alpha,\beta$-ungesättigte Amidomethylgruppen tragenden Mono- und/oder Polyphenole aus Phenolen bzw. Polyphenolen und Verbindungen der Formel

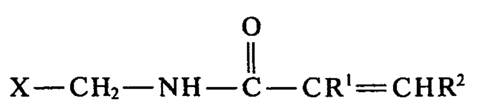

(III)

wobei X für OH, Halogen, wie z. B. Chlor oder eine Alkoxygruppe mit 1 bis 8, vorzugsweise 1 bis 4 Kohlenstoffatomen steht und $R^1$ und $R^2$ die oben angegebene Bedeutung haben.

Als Phenole sind Mono- und/oder Polyphenole, vor allem Diphenole der allgemeinen Formel

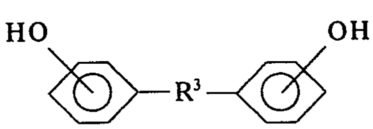

(IV)

geeignet, wobei die OH-Gruppen in ortho- und/oder para-Stellung zur $R^3$ stehen, und $R^3$ für einen geradkettigen oder verzweigten zweiwertigen aliphatischen Rest mit 1 bis 3 Kohlenstoffatomen oder für $-SO_2-$, $-SO-$, $-S-$, $-CO-$ oder $-O-$ steht; vorzugsweise geeignet ist 2,2-Bis-p-hydroxyphenol-propan (Bisphenol A).

Zur Einstellung des gewünschten Molekulargewichts der erfindungsgemäßen Bindemittel kann es vorteilhaft sein, einen Teil der Diphenole durch Monophenole zu ersetzen.

Geeignete Monophenole sind z. B. Phenol, Kresole, o- bzw. p-tert. Butylphenole, Cardanol etc. Cardanol ist ein Naturprodukt und besteht aus einem Gemisch langkettiger 2-Alkylenphenole mit etwa

13 bis 17 Kohlenstoffatomen im Alkylenrest, z. B. 3-(8,11-Pentadekadienyl)-phenol. Bedingt durch diese Alkylenketten führt die Mitverwendung von Cardanol zu Bindemitteln, mit denen besonders elastische Überzüge hergestellt werden können.

Die Umsetzung der Phenole mit den Verbindungen der Formel (III) kann in einem weiteren Temperaturbereich zweckmäßigerweise in Gegenwart von Lösungsmitteln, wie Toluol, Xylol, Isobutanol, Ethylglykol, Ethylhexanol etc. durchgeführt werden.

Bei Verwendung von starken Säuren wie HCl als Katalysatoren kann bei Temperaturen um 0°C gearbeitet werden, mit schwächer sauren Katalysatoren können Temperaturen bis etwa 160°C nötig sein.

Auch ist es möglich, Verbindungen der Formel (III) in situ herzustellen und mit dem betreffenden Phenol umzusetzen. So läßt sich zum Beispiel Acrylamid, Paraformaldehyd und 2,2-Bis-p-hydroxyphenyl-propan in Isobutanol mit Toluolsulfonsäure zu dem entsprechenden Diphenol mit $\alpha,\beta$-olefinisch ungesättigter Amidomethylgruppe umsetzen. Die dabei entstehenden geringen Mengen an Methylenbisacrylamid stören nicht, da sie unter Einbrennbedingungen ebenfalls zur Vernetzung beitragen.

Bei der Umsetzung von Phenolen mit Verbindungen der Formel (III) kommt es zu einer Abspaltung von HX und einer Amidomethylierung am aromatischen Kern des Phenols. Derartige Reaktionen sind als Tscherniac-Einhorn-Reaktionen bekannt. Die Umsetzung von 2,2-Bis-p-hydroxyphenyl-propan mit N-Methylolacrylamid in Eisessig mit HCl als Katalysator ist in der US-PS 3 839 447 beschrieben. Die auf diese Weise herstellbaren $\alpha,\beta$-olefinisch ungesättigte Amidomethylgruppen tragenden Diphenole können zur Herstellung der erfindungsgemäßen Polyadditionsprodukte eingesetzt werden.

Durch Mitverwendung von z. B. N-Methylol-fettsäureamiden können auf einfache Weise flexibilisierend wirkende Gruppen an die Phenole addiert werden.

Es können 0,3 bis 2,5 Mol der Verbindung der Formel (III) pro Äquivalent des Phenols (= phenolische OH-Gruppe) eingesetzt werden. Im allgemeinen sind jedoch 0,5 bis 1,5 Mol pro Äquivalent Phenol ausreichend, um eine optimale Vernetzungsdichte im fertigen Lackfilm zu erzielen.

Vorteilhaft ist die Komponente (C), also ein ein- oder zweikerniges Phenol der allgemeinen Formel

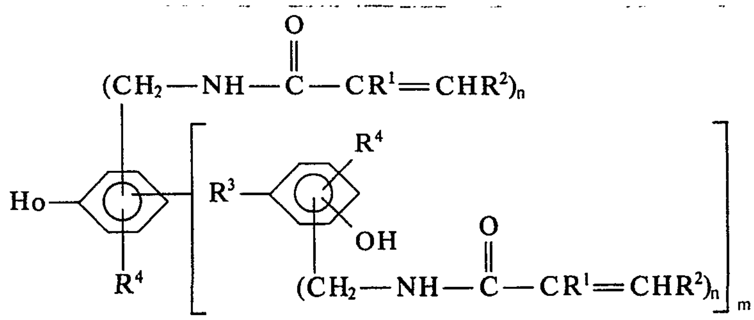

in der $R^1$ und $R^2$ untereinander gleich oder verschieden sind und für Wasserstoff oder eine Methylgruppe stehen, $R^3$ für einen geradkettigen oder verzweigten zweiwertigen Alkylenrest oder für $-SO-_2$, $-SO-$, $-S-$, $-CO-$ oder für $-O-$ steht, $R^4$ für Wasserstoff, eine Hydroxylgruppe oder einen Alkylrest steht, $n = 1$ bis 3 ist und $m = 0$ oder 1 ist.

Bei der Herstellung der erfindungsgemäßen Bindemittel wird das Umsetzungsprodukt aus (A), (B) und (C) abschließend zur Erzielung der Wasserdispergierbarkeit mit einem Amin oder einem Ammoniumsalz umgesetzt. Für diese Einführung von solubilisierenden Gruppen stehen nun zwei Wege zur Verfügung. Wenn das Zwischenprodukt aus (A) und (B) in einem solchen Molverhältnis mit (C) umgesetzt worden ist, daß das resultierende Umsetzungsprodukt endständige Epoxidgruppen aufweist, kann das Amin oder das Ammoniumsalz an diese Epoxidgruppen angelagert werden. Die zweite Möglichkeit besteht darin, ein primäres oder sekundäres Amin im Sinne einer Michael-Addition an die aus der Komponente (C) stammenden Doppelbindungen zu addieren. In diesem Fall ist es nicht erforderlich, daß das Umsetzungsprodukt aus (A), (B) und (C) Epoxidgruppen enthält. Sollten sie dennoch vorhanden sein, so werden sie vorteilhaft vor der Addition der Amine durch Umsetzung beispielsweise mit einer Carbonsäure, einem Alkohol, einem Thioalkohol oder einem Phenol geöffnet.

Das bei der Durchführung des ersten Weges für die Umsetzung mit den Epoxidgruppen als Komponente D verwendete Amin kann primär, sekundär oder tertiär sein, wobei sekundäre Amine sich besonders gut eignen. Primäre und sekundäre Amine können direkt an den Epoxidring angelagert werden, tertiäre nur in Form ihrer Ammoniumsalze oder über eine weitere funktionelle Gruppe im Molekül. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbuthylamin und dergleichen. Geeignet sind ebenfalls Alkanolamine wie z. B. Methylethanolamin, Diethanolamin und dergleichen. Ferner sind Dialkylaminoalkylamine wie z. B. Dimethylaminoethylamin, Diethylaminopropylamin und dergleichen geeignet.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch

Mischungen aus niedermolekularen und höhermolekularen Aminen zur Modifizierung der Harzeigenschaften verwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z. B. auf 50 bis 150° C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d. h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolisieren.

Anstelle der genannten Amine oder zusammen mit diesen kann auch ein Ammoniumsalz verwendet werden. Als Ammoniumsalz kann das Salz eines tertiären Amins verwendet werden. Zur Neutralisation der Amine geeignete Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Milchsäure. Beispiele von anderen Säuren sind Ameisensäure, Essigsäure, Propionsäure, Buttersäure, Salzsäure, Phosphorsäure, Schwefelsäure und Kohlensäure.

Der Aminanteil des Ammoniumsalzes ist ein Amin, das unsubstituiert oder substituiert wie im Falle des Hydroxylamins sein kann, wobei diese Substituenten die Umsetzung des Ammoniumsalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS 3 839 252 in Spalte 5, Zeile 3 bis Spalte 7, Zeile 42 angegeben.

Das Ammoniumsalz wird durch Umsetzung des Amins mit der Säure in bekannter Weise erhalten.

Die Reaktionstemperatur für die Umsetzung der Ammoniumsalze mit den Polyepoxiden kann zwischen der niedrigsten Temperatur, bei der die Umsetzung mit einer nennenswerten Geschwindigkeit verläuft, zum Beispiel Raumtemperatur oder in der Regel etwas höher als Raumtemperatur, bis zu einer maximalen Temperatur zwischen etwa 100 und 110° C variiert werden. Ein Lösungsmittel ist bei der Umsetzung nicht erforderlich, obwohl es häufig zugegeben wird, um die Reaktion besser steuern zu können. Als Lösungsmittel kommen aromatische Kohlenwasserstoffe oder Monoalkylether von Ethylenglykol in Betracht.

Das Verhältnis zwischen dem Ammoniumsalz und der Epoxidverbindung kann schwanken und die optimalen Verhältnisse hängen von den speziellen Ausgangsstoffen ab. Im allgemeinen können etwa 1 bis etwa 50 Gewichtsteile Salz auf 100 Gewichtsteilen Polyepoxid verwendet werden. Im allgemeinen wird das Verhältnis in Abhängigkeit von dem sich vom Quarternisierungsmittel ableitenden Stickstoffgehalt gewählt, der typischerweise etwa 0,05 bis etwa 16%, bezogen auf das Gesamtgewicht des Ammoniumsalzes und des Polyepoxides ausmacht.

Die Harze enthalten im allgemeinen den gesamten Stickstoff in Form von chemisch gebundenen quarternären Ammoniumgruppen, obwohl in manchen Fällen weniger als 100% des Stickstoffs in Form von quarternären Ammoniumgruppen vorliegt. Ein Beispiel für einen derartigen Fall liegt dann vor, wenn primäre und sekundäre Amine zur Herstellung der Harze mit quarternären Ammoniumgruppen verwendet werden. Solche Harze enthalten in der Regel sekundäre und tertiäre Ammoniumgruppen.

Die speziellen Ausgangsstoffe, Mengenanteile und Reaktionsbedingungen werden in Übereinstimmung mit den gut bekannten Erfahrungen so ausgewählt, daß eine Gelierung des Produktes während der Reaktion vermieden wird. So werden z. B. übermäßig aggressive Reaktionsbestimmungen nicht verwendet. In ähnlicher Weise werden Ausgangsstoffe mit reaktionsfähigen Substituenten, die sich mit den Epoxyverbindungen umsetzen können, nicht benutzt, da sie die Reaktion nachteilig beeinflussen können.

Für die Addition der Amine an die Doppelbindungen sind die oben genannten Amine geeignet, soweit es sich um primäre oder sekundäre Amine handelt, wobei sekundäre Amine bevorzugt werden. Die Michael-Addition kann in bekannter Weise unterhalb 120° C durchgeführt werden.

Die erfindungsgemäßen Bindemittel sind aufgrund ihrer Doppelbindungen selbstvernetzend. Vorteilhaft kann jedoch dem Elektrotauchlack zusätzlich ein Vernetzungsmittel zugesetzt werden, das bei erhöhten Temperaturen eine weitere Vernetzung bewirkt, oder das Bindemittel kann so modifiziert werden, daß es zusätzlich reaktive Gruppen enthält, die bei erhöhten Temperaturen eine Selbstvernetzung bewirken. Dies kann vorteilhaft dadurch erreicht werden, daß ein Teil der Hydroxylgruppen des Bindemittels mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den restlichen Hydroxylgruppen des Bindemittels unter Urethanbildung reagieren.

Häufig angewandte Methoden zur Vernetzung von Bindemitteln sind z. B. in folgenden Offenlegungsschriften publiziert: DE-OS 2 057 799, europäische Patentanmeldungen 12 463 und 4 090 und DE-OS 2 752 256.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Beispiele von geeigneten Aminoplastvernetzungsmitteln sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstoff-Formaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 200°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele von geeigneten Diisocyanaten sind

> Trimethylendiisocyanat, Tetramethylendiisocyanat, Pentamethylendiisocyanat, Hexamethylendiisocyanat, Propylendiisocyanant, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan,Bis-(4-isocyanatocyclohexyl)-methan, Bis-(4-isocyanatophenyl)-methan, 4,4'-Diisocyanatodiphenylether und 2,3-Bis-(8-isocyanatooctyl)-4-octyl-5-hexylcyclohexan.

Es können auch Polyisocyanate von höherer Isocyanatfunktionalität verwendet werden. Beispiele dafür sind

> Tris-(4-isocyanatophenyl)-methan, 1,3,5-Triisocyanatobenzol, 2,4,6-Triisocyanatotoluol, 1,3,5-Tris--(6-isocyanatohexyl)-biuret,Bis-(2,5-diisocyanato-4-methylphenyl)-methan

und polymere Polyisocyanate, wie Dimere und Trimere von Diisocyanatotoluol. Ferner kann man auch Mischungen von Polyisocyanaten benutzen.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Präpolymere mit endständigen Isocyanatgruppen entstehen. Beispiele von Polyolen, die hierfür verwendet werden können, sind einfache Polyole, wie Glykole, z. B. Ethylenglykol und Propylenglykol, und andere Polyole, wie Glycerin, Trimethylolpropan, Hexantriol und Pentaerythrit; ferner Monoether, wie Diethylenglykol und Tripropylenglykol sowie Polyester, die Kondensate solcher Polyole mit Alkylenoxiden sind. Beispiele von Alkylenoxiden, die sich für die Kondensation mit diesen Polyolen unter Bildung von Polyethern eignen, sind Ethylenoxid, Propylenoxid, Butylenoxid und Styroloxid. Man bezeichnet diese Kondensate im allgemeinen als Polyether mit endständigen Hydroxylgruppen. Sie können linear oder verzweigt sein. Beispiele von solchen Polyethern sind Polyoxyethylenglykol von einem Molekulargewicht von 1 540, Polyoxypropylenglykol mit einem Molekulargewicht von 1 025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Pentaerythrit, Dipentaerythrit, Tripentaerythrit, Polypentaerythrit, Methylgluskosiden und Saccharose mit Alkylenen, wie Ethylenoxid, Propylenoxid oder Mischungen davon.

Für die Blockierung der Polyisocyanate können beliebige geeignete aliphatische, cycloaliphatische oder aromatische Aklylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeignete Blockierungsmittel sind Hydroxylamine, wie Ethanolamin und Oxime, wie Methylethylketonoxim, Acetonoxim und Cyclohexanonoxim.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80°C, insbesondere niedriger als 50°C ist, gemischt, um dem exothermen Effekt entgegenzuwirken.

Die genannten Polyisocyanate und Blockierungsmittel können bei geeigneten Mengenverhältnissen auch zur Herstellung der oben beschriebenen teilblockierten Polyisocyanate verwendet werden.

Die Erfindung betrifft auch ein Verfahren zur Herstellung der Bindemittel, das dadurch gekennzeichnet ist, daß

(A) niedermolekulare, aromatische Gruppen enthaltende Epoxidharze mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart umgesetzt werden, daß die Umsetzungsprodukte einen Anteil an aromatischen Gruppen, berechnet als Phenylengruppe, von 10—45% enthalten und endständige Epoxidgruppen aufweisen,

(C) die Epoxidgruppen unter Kettenverlängerung mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

$$-CH_2-NH-\overset{\overset{\displaystyle O}{\|}}{C}-CR^1=CHR^2 \qquad (I)$$

als Substituenten an dem oder den aromatischen Ringen, in der $R^1$ und $R^2$ untereinander gleich oder verschieden sind und für Wasserstoff oder eine Methylgruppe stehen, weiter umgesetzt werden und

(D) ein primäres oder sekundäres Amin oder ein Ammoniumsalz mit dem aus (A), (B) und (C) erhaltenen Zwischenprodukt umgesetzt wird.

Das Verfahren wird folgendermaßen durchgeführt: Die Komponente A und die Komponente B werden gemischt und gegebenenfalls unter Hinzugabe von Katalysatoren, wie z. B. tertiären Aminen, bei Temperaturen zwischen 100 und 140°C, vorzugsweise 115 bis 135°C, vollständig umgesetzt. Die Umsetzung kann anhand des Epoxidäquivalentgewichtes überprüft werden. Dieses Reaktionsprodukt aus den Komponenten A und B wird mit der Komponente C bei Temperaturen zwischen 100 und 160°C weiter modifiziert. Das so erhaltene Reaktionsprodukt kann je nach den eingesetzten Molverhältnissen der Komponenten freie Epoxidgruppen enthalten. Für den letztgenannten Reaktionsschritt können die gleichen Katalysatoren verwendet werden wie bei der Umsetzung der Komponenten A und B. Das so erhaltene Reaktionsprodukt wird mit der Komponente D bei Temperaturen zwischen 60 und 120°C umgesetzt, so daß ein Bindemittel entsteht, das basische Aminogruppen enthält. Hierbei wird die Komponente D entweder an die Epoxidgruppen angelagert oder, falls keine Epoxidgruppen vorliegen, an die Doppelbindungen aus der Komponente (C) addiert. Das basische Reaktionsprodukt kann durch Zugabe von Säuren ganz oder teilweise protonisiert werden und anschließend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150°C, vorzugsweise bei Temperaturen zwischen 100 und 130°C, mit dem Bindemittel umgesetzt. Die erhaltenen Bindemittel stellen stabile gut handhabbare Dispersionen dar. Gegebenenfalls kann es auch zweckmäßig sein, vor der Dispersionsherstellung die Bindemittel in geeigneten organischen Lösungsmitteln zu lösen. Geeignete Lösungsmittel sind z. B. Glykolether, Ethylglykol, Butylglykol, Ketone, wie Diethylketon, Methylethylketon, Methylisobutylketon und andere.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphthenische und aromatische Kohlenwasserstoffe oder Mischungen davon; Mono- und Dialkylether von Glykolen, sibirisches Fichtennadelöl und andere Lösungsmittel, die mit dem Harzsystem verträglich sind. Das zur Zeit bevorzugte Modifizierungsmittel ist 4-Methoxy-4-methylpentanon-2.

Dem Elektrotauchbad können außerdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Ester von Natriumisothionaten, Alkylphenoxypolyethylenalkanole oder Phosphatester, einschließlich von ethoxilierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisierten Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel, die dadurch gekennzeichnet sind, daß die Bindemittel hergestellt worden sind durch Umsetzung von

(A) niedermolekularen, aromatische Gruppen enthaltenden Epoxidharzen mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart, daß die Umsetzungsprodukte einen Anteil an aromatischen Gruppen, berechnet als Phenylengruppe, von 10—45% enthalten und endständige Epoxidgruppen aufweisen,

(C) weitere Umsetzung der Epoxidgruppen unter Kettenverlängerung mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

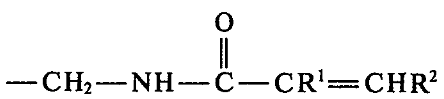
(I)

als Substituenten an dem oder den aromatischen Ringen, in der $R^1$ und $R^2$ untereinander gleich oder verschieden sind und für Wasserstoff oder eine Methylgruppe stehen, und

(D) weitere Umsetzung des aus (A), (B) und (C) erhaltenen Zwischenprodukts mit einem primären oder sekundären Amin oder einem Ammoniumsalz.

Als Substrat kann bei der elektrischen Abscheidung ein beliebiges elektrisch leitendes Substrat dienen. Üblicherweise handelt es sich dabei um Metallsubstrate, wie z. B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wäßrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

Vorprodukt 1

500 Teile Dihydroxydiphenylsulfon und 606 Teile Methylolacrylamid werden bei 50° C in 456 Teilen Essigsäure gelöst, anschließend auf 15° C abgekühlt und bei dieser Temperatur HCl-Gas bis zur Sättigung eingeleitet. Danach wird 6 Stunden auf 65° C erhitzt. Anschließend kühlt man ab. Danach wird mit 2000 Teilen Methylenchlorid verdünnt und anschließend viermal mit je 2000 Teilen Wasser ausgeschüttelt. Beim Ausschütteln mit Wasser wird zur Löslichkeitsvermittlung etwas Aceton zugesetzt. Schließlich wird noch einmal mit einer Lösung von 100 Teilen Natriumcarbonat in 2000 Teilen Wasser ausgeschüttelt und die organische Phase über Natriumsulfat getrocknet. Nach Abziehen des Lösungsmittels im Vakuum bei 80° C bleibt eine viskose, nahezu farblose Masse zurück.

Vorprodukt 2

Es wird wie bei der Herstellung des Vorprodukts 1 verfahren. Anstelle von 500 Teilen Dihydroxydiphenylsulfon werden jedoch 456 Teile 2,2-(4,4'-Dihydroxydiphenyl)propan eingesetzt, und der Anteil Methylolacrylamid wird von 606 Teilen auf 808 Teilen erhöht.

Vorprodukt 3

Es wird wie bei der Herstellung des Vorprodukts 1 verfahren. Anstelle von 500 Teilen Dihydroxydiphenylsulfon werden jedoch 400 Teile 4,4'-Dihydroxydiphenylmethan eingesetzt und der Anteil Methylolacrylamid wird von 606 Teilen auf 707 Teilen erhöht.

Vorprodukt 4

Darstellung eines Vernetzungsmittels 1

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80% 2,4-Toluylendiisocyanat und etwa 20% 2,6-Toluylendiisocyanat) beschickt. Es wird Stickstoff eingeleitet und der Kühler wird eingeschaltet. Im Verlauf von 5 Stunden werden 5550,5 Teile 2-Äthylhexanol allmählich zugegeben, wobei die Temperatur allmählich auf 50° C steigt. Während die Temperatur von 50° C aufrechterhalten wird, werden weitere 3649,5 Teile 2-Äthylhexanol im Verlauf von 4 Stunden zugegeben. Die Reaktionsmischung wird 75 Minuten bei 50° C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65,6° C erwärmt. Im Verlauf von 2 Stunden und 50 Minuten werden 3184 Teile 1,1,1-Trimethylolpropan zugegeben, wobei die Temperatur von 65,6 auf 120° C steigt. Die Reaktionsmischung wird bei dieser Temperatur 90 Minuten gehalten, dann werden 10 560 Teile 2-Ethoxiethanol zugegeben. Das entstandene Produkt ist eine Lösung eines Polyurethanvernetzungsmittels.

Vorprodukt 5

Darstellung eines polyfunktionellen Vernetzungsmittels

2340 g Glycidylester der 2-Methyl-1-Ethylheptansäure werden mit 2073 g Trimellithsäureanhydrid in einem Reaktionsgefäß auf 130° C erhitzt. Hierbei springt die stark exotherme Reaktion an. Durch externe Kühlung wird die Reaktion bei 150° C gehalten, bis eine Säurezahl von 183 erreicht ist. Danach kühlt man auf 90° C ab und setzt 1450 g MIBK (MIBK = Methylisobutylketon) zu. Anschließend tropft man 853 g Propylenoxid langsam zu. Bei einer Säurezahl < 2 wird die Reaktion abgebrochen. Der Festkörper der Harzlösung wird mit weiterem MIBK (MIBK = Methylisobutylketon) auf 70% eingestellt.

Vorprodukt 6

Darstellung eines Mahlbindemittels und einer Pigmentpaste

Ein Reaktor, der mit einer Heizvorrichtung, einem Kühler, einem Rührer und einer Stickstoffeinleitung ausgerüstet ist, wird mit 1948 g Bisphenol-A-diglycidylether und 817 Teile 2,2-Dimethyl-3-hydroxypropyl-2,2-dimethyl-3-hydroxypropionat beschickt. Der Ansatz wird nun erhitzt und die Temperatur bei 132° C gehalten, bis das Epoxidäquivalentgewicht von 1350 erreicht ist. Dann werden 675 g einer 90%igen Lösung in Methylisobutylketon des halbverkappten Diisocyanats aus 2-Ethylhexanol und

Toluylendiisocyanat zugesetzt. Hierzu gibt man nun langsam 3109 g Butylglykol und kühlt auf 80° C ab. Inzwischen wurde folgendes Ammoniumsalz vorbereitet: In 40,4 Teilen Butylglykol werden das Umsetzungsprodukt auf 89,9 Teilen Diethynolamin mit 330,9 Teilen eines halbverkappten Diisocyanats aus 2-Ethylhexanol und Toluylendiisocyanat (95%ig in Methylisobutylketon) mit einer Mischung aus 121,3 Teilen 88%iger Milchsäure und 95,7 Teilen entionisiertem Wasser neutralisiert. Von diesem Ammoniumsalz werden 884,1 g zugefügt. Dann werden nochmals 220 g Butylglykol zugegeben und der Ansatz für 4 Stunden bei 80° C gehalten. Anschließend wird die Harzlösung filtriert.

Danach wird eine klare Lösung von 224 g Harzlösung, 419 g entionisiertem Wasser und 3,2 g Dibutylzinnoxid hergestellt. In einer Mühle wird auf eine Hegman-Feinheit 7 gemahlen und die Mahlung danach filtriert.

Die Pigmentpaste wird aus folgenden Komponenten formuliert: 387 g Harzlösung werden mit 631 g entionisiertem Wasser, 387 g Aluminiumsilikat, 68 g Bleisilikat und 54,2 g Ruß gemischt. Die Mischung wird 15 Minuten auf einer Cowles-Mühle angemahlen. Danach werden 34 g Strontiumchromat zugesetzt. Danach wird das Material in einer Mühle auf eine Hegman-Feinheit 7 gemahlen. Es werden noch 55,5 g der oben beschriebenen, klaren Lösung zugemischt. Die Mischung wird filtriert und als schwarze Pigmentpaste eingesetzt.

## Beispiel 1

Ein Reaktor, der mit einer Heizeinrichtung, einem Rührer, einem Thermometer, einem Kühler und einer Stickstoffeinleitung ausgestattet ist, wird mit 998 Teilen eines handelsüblichen Epoxidharzes auf Basis Bisphenol A mit einem Epoxidäquivalentgewicht von 188 und 212 Teilen 2-Ethyl-2-butylpropandiol-1,3 sowie 5,4 Teilen Dimethylbenzylamin beschickt. Die Temperatur wird auf 132° C angehoben und die Reaktion durchgeführt, bis ein Epoxidäquivalentgewicht von 440 erreicht ist. Danach werden 90 Teile Xylol und 3 Teile 2,6-Di-tert.-butyl-p-Kresol zugegeben sowie 705 Teile des oben beschriebenen Vorproduktes 1 und 5 Teile Tributylphosphin. Durch Kühlung wird die exotherme Reaktion bei 85° C gehalten, bis ein Epoxidäquivalentgewicht von 1170 erreicht ist. Danach werden 55 Gew.-%, auf den Festkörper bezogen, der als Vorprodukt 4 beschriebenen Vernetzerlösung zugegeben. Man setzt 99 Teile eines Umsetzungsproduktes aus Diethylentriamin und Methyl-isobutylketon 70%ig in Methylisobutylketon und 78 Teile Methylethanolamin zu. Nach 1 Stunde werden noch 166 Teile Phenylglykol zugegeben und 15 Minuten untergemischt. Inzwischen wird ein Dispergierbad aus 36 Teilen Eisessig und 62 Teilen einer handelsüblichen Emulgierlösung in 1964 Teilen entionisiertem Wasser hergestellt. In dieses Bad wird die Harzlösung eingerührt. Nach 90 Minuten werden noch 1478 Teile entionisiertes Wasser zugegeben und 30 Minuten untergemischt.

## Beispiel 2

Ein 4-l-Reaktionsgefäß, das mit einer Heizeinrichtung, einem Rührer, einem Thermometer, einem Kühler und einer Stickstoffeinleitung ausgestattet ist, wird mit 1290 Teilen eines handelsüblichen Epoxidharzes auf Basis Bisphenol A mit einem Epoxidäquivalentgewicht von 188 und 350 Teilen Hydroxypivalinsäureneopentylglykolester sowie 82 Teilen Xylol und 6 Teilen Dimethylbenzylamin beschickt. Die Temperatur wird auf 135° C angehoben und die Reaktion bis zu einem Epoxidäquivalentgewicht von 460 geführt. Danach werden 2 Teile 2,6-Di-tert.-butyl-p-Kresol und 428 Teile des oben beschriebenen Vorprodukts 1 zugegeben. Die Umsetzung wird bei 135° C durchgeführt, bis ein Epoxidäquivalentgewicht von 1180 erreicht ist. Dann gibt man 247 Teile 2-Ethylhexansäure zu. Wenn keine Epoxidgruppen mehr nachzuweisen sind, gibt man 162 Teile Phenylglykol zu und kühlt auf 60° C ab. Danach setzt man 134 Teile Diethanolamin zu und führt die Michael-Addition an die Doppelbindungen durch.

Währenddessen wird ein Dispergierbad aus 2424 Teilen entionisiertem Wasser, 51 Teilen Eisessig und 37 Teilen einer handelsüblichen Emulgatormischung vorbereitet. Darin wird die Harzlösung dispergiert. Nach 90 Minuten werden weitere 1793 Teile entionisiertes Wasser zugegeben und 30 Minuten untergemischt.

## Beispiel 3

Ein Reaktionsgefäß wird mit 1161 Teilen eines handelsüblichen Epoxidharzes auf Basis Bisphenol A (Epoxidäquivalentgewicht 188), 204 Teilen Dimethylmalonsäure, 82 Teilen Xylol und 3 Teilen Dimethylbenzylamin beschickt. Die Temperatur wird auf 145° C angehoben und die Reaktion durchgeführt, bis ein Epoxidäquivalentgewicht von 420 erreicht ist. Hierauf setzt man 378 Teile des Vorprodukts 3 und 1,5 Teile 2,6-Di-tert.-butyl-p-Kresol zu und führt die Reaktion bis 115° C weiter, bis ein Epoxidäquivalentgewicht von 1100 erreicht ist. Danach setzt man 375 Teile des Umsetzungsprodukts aus Methylaminopropylamin und MIBK (MIBK = Methylisobutylketon), 70%ig in MIBK (MIBK = Methylisobutylke-

ton) gelöst, zu. Nach einer Stunde fügt man 834 Teile der als Vorprodukt 5 beschriebenen Vernetzerlösung zu und mischt 15 Minuten unter. Danach gibt man 207 Teile Hexylglykol zu und mischt weitere 15 Minuten.

Inzwischen wird ein Dispergierbad aus 2141 Teilen entionisiertem Wasser, 52 Teilen einer handelsüblichen Emulgatormischung und 62 Teilen Eisessig bereitet. Hierin wird die Harzlösung dispergiert. Nach einer Stunde gibt man weitere 1490 Teile Wasser zu und mischt diese 15 Minuten unter. Danach setzt man nochmals 1633 Teile Wasser zu und unterwirft die Dispersion einer Vakuumdestillation, um störende Lösungsmittel zu entfernen. Insgesamt werden 400 Teile wäßrige und organische Phase abgezogen. Die Dispersion weist und dann einen Festkörper von 35% auf.

## Beispiel 4

Ein Reaktionsgefäß wird mit 1279 Teilen eines handelsüblichen Epoxidharzes auf Basis Bisphenol A (Epoxidäquivalentgewicht 188), 255 Teilen Thiodipropylenglykol, 99 Teilen Xylol und 4 Teilen Dimethylbenzylamin beschickt. Die Temperatur wird auf 135° C angehoben und die Reaktion durchgeführt, bis ein Epoxidäquivalentgewicht von 420 erreicht ist. Danach setzt man 476 Teile des Vorprodukts 2 und 2 Teile 2,6-Di-tert.-butyl-p-Kresol zu. Die Reaktion wird bis zu einem Epoxidäquivalentgewicht von 1150 vorangetrieben. Hierauf werden 265 Teile 3,3,5-Trimethylhexansäure zugefügt. Die Reaktion wird bei 135° C fortgesetzt, bis keine Epoxidgruppen mehr nachzuweisen und die Säurezahl $< 3$ ist. Dann werden 196 Teile eines handelsüblichen Gemisches von Diisobutylestern zugegeben, man kühlt auf 70° C ab und gibt 178 Teile Diethanolamin zu. Die Temperatur soll hierbei 70° C nicht überschreiten.

Inzwischen wird aus 2213 Teilen entionisiertem Wasser, 37 Teilen einer handelsüblichen Emulgatormischung und 102 Teilen Eisessig ein Dispergierbad vorbereitet. Darin wird die Harzlösung dispergiert. Nach einer Stunde setzt man weitere 1895 Teile entionisiertes Wasser zu, um den Festkörper auf 35% zu erniedrigen. Dieser Wassermenge mischt man weitere 15 Minuten unter.

## Beispiel 5

Ein Reaktionsgefäß wird mit 1440 Teilen eines handelsüblichen Epoxidharzes auf Basis Bisphenol A (Epoxidäquivalentgewicht 188), 199 Teilen Neopentylglykol, 81 Teilen Xylol und 6 Teilen Dimethylbenzylamin beschickt. Die Temperatur wird auf 133° C angehoben und die Reaktion durchgeführt, bis ein Epoxidäquivalentgewicht von 400 erreicht ist. Danach gibt man 536 Teile des Vorproduktes 2 und 2 Teile 2,6-Di-tert.-butyl-p-Kresol zu und setzt die Reaktion fort, bis ein Epoxidäquivalentgewicht von 1100 erreicht ist. Danach gibt man rasch hintereinander 144 Teile des Umsetzungsprodukts aus Diethylentriamin und MIBK (MIBK = Methylisobutylketon), 70%ig in MIBK (MIBK = Methylisobutylketon) angelöst, und 115 Teile Methylethanolamin zu. Hierzu hat man auf 115° C abgekühlt und bei dieser Temperatur wird die Umsetzung während einer Stunde komplettiert. Danach gibt man noch 193 Teile 2,2,4-Trimethylpentandiol-1,3 zu und mischt diese 15 Minuten unter. Inzwischen wird aus 2157 Teilen entionisiertem Wasser, 52 Teilen einer handelsüblichen Emulgatormischung und 57 Teilen Eisessig ein Dispergierbad vorbereitet. Hiervon wird dann die Harzlösung dispergiert. Nach einer Stunde fügt man weitere 1819 Teile entionisiertes Wasser zu und mischt sie 15 Minuten unter. Die Dispersion weist einen Festkörper von 37% auf.

## Bereitung der Abscheidebäder

Zur Zubereitung der Abscheidebäder werden die Harzdispersionen mit der oben beschriebenen Pigmentpaste sowie weiterem, entionisiertem Wasser und Essigsäure entsprechend folgender Rezeptur komplettiert:

| | |
|---|---|
| 2100 Teile | Harzdispersion |
| 710 Teile | Pigmentpaste |
| 25 Teile | 10%ige Essigsäure |
| 2165 Teile | entionisiertes Wasser |

Die Abscheidung der Lackfilme erfolgt bei 27° C Badtemperatur während 2 Minuten an dem als Kathode geschalteten, phosphatierten Blech. Die abgeschiedenen Filme werden mit Wasser abgespült und mit Preßluft trocken geblasen. Abschließend erfolgt das Einbrennen der Filme im Umlufttrockenofen.

Die Ergebnisse der Abscheidungen sind in folgender Tabelle zusammengefaßt.

Ergebnis der Abscheidungen

| | Beispiel 1 | Beispiel 2 | Beispiel 3 | Beispiel 4 | Beispiel 5 |
|---|---|---|---|---|---|
| Abscheidespannung (V) | 270 | 280 | 350 | 310 | 280 |
| Einbrenntemperatur (°C) | 180 | 185 | 180 | 185 | 185 |
| Einbrenndauer (min.) | 20 | 15 | 15 | 20 | 20 |
| Schichtdicke (µm) | 43 | 47 | 33 | 38 | 37 |
| Verlauf | 1 | 2 | 1 | 1 | 1 |
| MIBK-Festigkeit | i. O. | i. O. | i. O. | i. O. | i. O. |
| Gitterschicht (DIN 53 151) | 0 | 0 | 0 | 0 | 0 |

MIBK = Methylisobutylketon
i. O. = in Ordnung

**Patenansprüche**

1. Wasserdispergierbare Bindemittel für kationische Elektrotauchlacke auf der Basis von Umsetzungsprodukten von modifizierten Epoxidharzen und primären und/oder sekundären Aminen, die gegebenenfalls Vernetzungsmittel, Pigmente, Verlaufmittel und andere übliche Hilfsmittel enthalten, dadurch gekennzeichnet, daß als Umsetzungsprodukte solche enthalten sind, die hergestellt worden sind durch Umsetzung von

(A) niedermolekularen, aromatische Gruppen enthaltenden Epoxidharzen mit einem Epoxidäquivalentgewicht unter 375 mit
(B) aliphatischen und/oder alicyclischen polyfunktionellen Alkoholen oder Carbonsäuren mit einem Molekulargewicht unter 350 unter Addition an die Epoxidgruppe derart, daß die Umsetzungsprodukte einen Anteil an aromatischen Gruppen, berechnet als Phenylgruppe, von 10—45% enthalten und endständige Epoxidgruppen aufweisen,
(C) weitere Umsetzung der Epoxidgruppen unter Kettenverlängerung mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

$$-CH_2-NH-\overset{\overset{\displaystyle O}{\|}}{C}-CR^1{=}CHR^2 \qquad (I)$$

als Substituenten an dem oder den aromatischen Ringen, in der $R^1$ und $R^2$ untereinander gleich oder verschieden sind und für Wasserstoff oder eine Methylgruppe stehen, und
(D) weitere Umsetzung des aus (A), (B) und (C) erhaltenen Zwischenproduktes mit einem primären oder sekundären Amin oder einem Ammoniumsalz.

2. Bindemittel nach Anspruch 1, dadurch gekennzeichnet, daß das Zwischenprodukt aus (A) und (B) mit (C) in einem solchen Molverhältnis umgesetzt worden ist, daß das resultierende Umsetzungsprodukt endständige Epoxidgruppen aufwies, und daß das Amin oder Ammoniumsalz (D) an diese Epoxidgruppen angelagert worden ist.

3. Bindemittel nach Anspruch 1, dadurch gekennzeichnet, daß gegebenenfalls vorhandene endständige Epoxidgruppen des Umsetzungsproduktes aus (A), (B) und (C) durch Umsetzung geöffnet worden sind und das Amin (D) an einen Teil der aus der Komponente (C) stammenden Doppelbindungen addiert worden ist.

4. Bindemittel nach Anspruch 3, dadurch gekennzeichnet, daß die Epoxidgruppen durch Umsetzung mit einer Carbonsäure, einem Alkohol, einem Thioalkohol oder einem Phenol geöffnet worden sind.

5. Bindemittel nach Anspruch 1 bis 4, dadurch gekennzeichnet, daß als Komponente (C) ein ein- oder zweikerniges Phenol der folgenden allgemeinen Formel

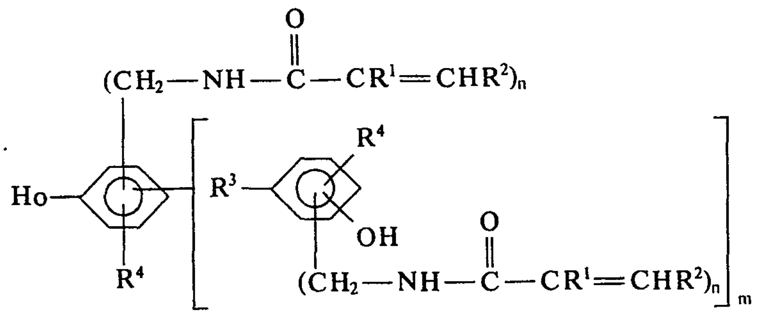

verwendet worden ist, in der $R^1$ und $R^2$ untereinander gleich oder verschieden sind und für Wasserstoff oder eine Methylgruppe stehen, $R^3$ für einen geradkettigen oder verzweigten zweiwertigen Alkylenrest oder für $-SO_2-$, $-SO-$, $-S-$, $-CO-$ oder für $-O-$ steht, $R^4$ für Wasserstoff, eine Hydroxylgruppe oder einen Alkylrest steht, n = 1 bis 3 ist und m = 0 oder 1 ist.

6. Bindemittel nach Anspruch 1 bis 5, dadurch gekennzeichnet, daß als Komponente A ein Epoxidharz auf Basis Bisphenol A verwendet worden ist.

7. Bindemittel nach Anspruch 1 bis 5, dadurch gekennzeichnet, daß als Komponente A ein Polyglycidylester verwendet worden ist.

8. Bindemittel nach Anspruch 1 bis 7, dadurch gekennzeichnet, daß als Komponente B ein Diol oder eine Dicarbonsäure mit einer verzweigten aliphatischen Kette verwendet worden ist.

9. Bindemittel nach Anspruch 1 bis 8, dadurch gekennzeichnet, daß als Komponente B ein Diol oder eine Dicarbonsäure mit mindestens einer Neostruktur verwendet worden ist.

10. Bindemittel nach Anspruch 1 bis 9, dadurch gekennzeichnet, daß daß der Anteil der Komponente C 10—50 Gew.-%, bezogen auf das gesamte Bindemittel, beträgt.

11. Bindemittel nach Anspruch 1 bis 10, dadurch gekennzeichnet, daß ein Teil der Hydroxylgruppen mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt worden ist.

12. Verfahren zur Herstellung von Bindemitteln für kationische Elektrotauchlacke auf der Basis von Umsetzungsprodukten von modifizierten Epoxidharzen und primären, sekundären und/oder tertiären Aminen, die gegebenenfalls Vernetzungsmittel, Pigmente, Verlaufmittel und andere übliche Hilfsmittel enthalten, dadurch gekennzeichnet, daß

(A) niedermolekulare, aromatische Gruppen enthaltenden Epoxidharze mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart umgesetzt werden, daß die Umsetzungsprodukte einen Anteil an aromatischen Gruppen, berechnet als Phenylengruppe, von 10—45% enthalten und endständige Epoxidgruppen aufweisen,

(C) die Epoxidgruppen unter Kettenverlängerung mit den phenolischen Hydroxylgruppen eines ein- oder mehrkernigen Phenols mit mindestens zwei phenolischen Hydroxylgruppen und mindestens einer $\alpha,\beta$-olefinisch ungesättigten Amidomethylgruppe der folgenden allgemeinen Formel

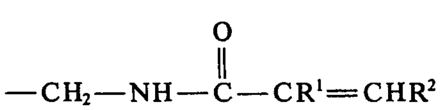

(I)

als Substituenten an dem oder den aromatischen Ringen, in der $R^1$ und $R^2$ untereinander gleich oder verschieden sind und für Wasserstoff oder eine Methylgruppe stehen, weiter umgesetzt werden und

(D) ein primäres oder sekundäres Amin oder ein Ammoniumsalz mit dem aus (A), (B) und (C) erhaltenen Zwischenprodukt umgesetzt wird.

13. Verfahren nach Anspruch 12, dadurch gekennzeichnet, daß das Zwischenprodukt aus (A) und (B) mit (C) in einem solchen Molverhältnis umgesetzt wird, daß das resultierende Umsetzungsprodukt endständige Epoxidgruppen aufweist, und daß das Amin oder Ammoniumsalz (D) an diese Epoxidgruppen angelagert wird.

14. Verfahren nach Anspruch 12, dadurch gekennzeichnet, daß gegebenenfalls vorhandene endständige Epoxidgruppen des Umsetzungsproduktes aus (A), (B) und (C) durch Umsetzung geöffnet werden und das Amin (D) an einen Teil der aus der Komponente (C) stammenden Doppelbindungen addiert wird.

15. Verfahren nach Anspruch 14, dadurch gekennzeichnet, daß die Epoxidgruppen durch Umsetzung mit einer Carbonsäure, einem Alkohol, einem Thioalkohol oder einem Phenol geöffnet werden.

16. Verfahren nach Anspruch 12 bis 15, dadurch gekennzeichnet, daß als Komponente (C) ein ein- oder zweikerniges Phenol der folgenden allgemeinen Formel

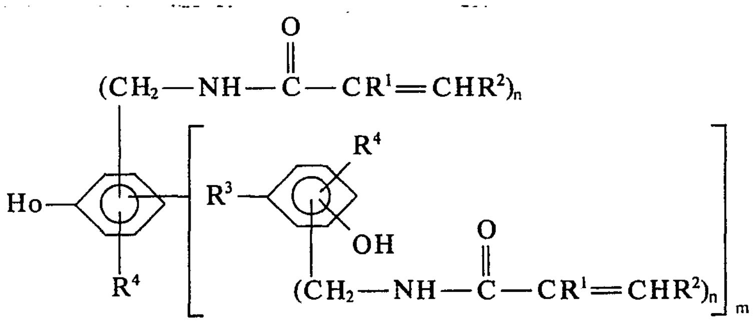

verwendet wird, in der $R^1$ und $R^2$ untereinander gleich oder verschieden sind und für Wasserstoff oder eine Methylgruppe stehen, $R^3$ für einen geradkettigen oder verzweigten zweiwertigen Alkylenrest oder für $-SO_2-$, $-SO-$, $-S-$, $-CO-$ oder für $-O-$ steht, $R^4$ für Wasserstoff, eine Hydroxylgruppe oder einen Alkylrest steht, n = 1 bis 3 ist und m = 0 oder 1 ist.

17. Verfahren nach Anspruch 12 bis 16, dadurch gekennzeichnet, daß als Komponente A Epoxidharze auf Basis Bisphenol A verwendet werden.

18. Verfahren nach Anspruch 12 bis 16, dadurch gekennzeichnet, daß als Epoxidharze Polyglycidylester verwendet werden.

19. Verfahren nach Anspruch 12 bis 16, dadurch gekennzeichnet, daß als Komponente B ein Diol oder eine Dicarbonsäure mit einer verzweigten aliphatischen Kette verwendet wird.

20. Verfahren nach Anspruch 12 bis 19, dadurch gekennzeichnet, daß als Komponente B ein Diol oder eine Dicarbonsäure mit mindestens einer Neostruktur verwendet wird.

21. Verfahren nach Anspruch 12 bis 20, dadurch gekennzeichnet, daß der Anteil der Komponente C 10—50 Gew.-%, bezogen auf das gesamte Bindemittel, beträgt.

22. Verfahren nach Anspruch 12 bis 21, dadurch gekennzeichnet, daß ein Teil der Hydroxylgruppen des Reaktionsproduktes der Komponenten A, B, C und D mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt wird.

23. Verfahren der Bindemittel nach Anspruch 1 bis 11 für Elektrotauchbäder.

24. Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel, dadurch gekennzeichnet, daß die Bindemittel hergestellt worden sind durch Umsetzung von

(A) niedermolekularen, aromatische Gruppen enthaltenden Epoxidharzen mit einem Epoxidäquivalentgewicht unter 375 mit

(B) aliphatischen und/oder alicyclischen polyfunktionellen Alkohole oder Carbonsäuren mit einem Molekulargewicht unter 350 unter Addition an die Epoxidgruppe derart, daß die Umsetzungsprodukte einen Anteil an aromatischen Gruppen, berechnet als Phenylgruppe, von 10—45% enthalten und endständige Epoxidgruppen aufweisen,

(C) weitere Umsetzung der Epoxidgruppen unter Kettenverlängerung mit den phenolischen Hydroxylgruppen eines ein- oder mehrkanaligen Phenols mit mindestens zwei phenolischen Hydroxylgruppen und mindestens einer $\alpha,\beta$-olefinisch ungesättigten Amidomethylgruppe der folgenden allgemeinen Formel

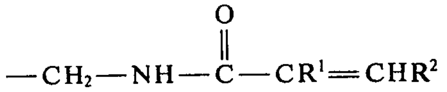 (I)

als Substituenten an dem oder den aromatischen Ringen, in der $R^1$ und $R^2$ untereinander gleich oder verschieden sind und für Wasserstoff oder eine Methylgruppe stehen, und

(D) weitere Umsetzung des aus (A), (B) und (C) erhaltenen Zwischenproduktes mit einem primären oder sekundären Amin oder einem Ammoniumsalz.

25. Verfahren nach Anspruch 24, dadurch gekennzeichnet, daß für die Herstellung der Bindemittel als Komponente A ein Epoxidharz auf Basis Bisphenol A verwendet worden ist.

26. Verfahren nach Anspruch 24, dadurch gekennzeichnet, daß für die Herstellung der Bindemittel als Komponente A ein Polyglycidylester verwendet worden ist.

27. Verfahren nach Anspruch 24 bis 26, dadurch gekennzeichnet, daß für die Herstellung der Bindemittel als Komponente B ein Diol oder eine Dicarbonsäure mit einer verzweigten aliphatischen Kette verwendet worden ist.

28. Verfahren nach Anspruch 24 bis 27, dadurch gekennzeichnet, daß für die Herstellung der Bindemittel als Komponente B ein Diol oder eine Dicarbonsäure mit mindestens einer Neostruktur verwendet worden ist.

29. Verfahren nach Anspruch 24 bis 28, dadurch gekennzeichnet, daß der Anteil der Komponente C 10—50 Gew.-%, bezogen auf das gesamte Bindemittel, beträgt.

## Claims

1. A water-dispersible binder which is intended for cationic electropaints and is based on reaction products which are formed from modified epoxy resins and primary and/or secondary amines and which can, if desired, also contain crosslinking agents, pigments, flowcontrol agents and other customary auxiliaries, which contains as reaction products those which have been prepared by reacting

(A) low molecular weight epoxy resins which contain aromatic groups and have an epoxide equivalent weight of less than 375 with

(B) aliphatic and/or alicyclic polyfunctional alcohols or carboxylic acids having a molecular weight of less than 350 by addition to the epoxy group in such a way that the reaction products contain 10—45% of aromatic group, calculated as the phenylene group, and have terminal epoxy groups.

(C) reacting the epoxy groups, and thus chain-lengthening, with the phenolic hydroxyl groups of a mononuclear or polynuclear phenol which has at least two phenolic hydroxyl groups and at least one α,β-olefinically unsaturated amidomethyl group of the following formula

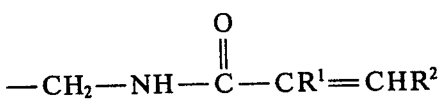 (I)

as a substituent on the aromatic ring(s) and in which $R^1$ and $R^2$ are identical to or different from one another and represent hydrogen or a methyl group, and

(D) reacting the intermediate product obtained from (A), (B) and (C) with a primary or secondary amine or an ammonium salt.

2. A binder as claimed in claim 1, in which the intermediate product of (A) and (B) with (C) has been reacted in such a molar ratio that the resulting reaction product has terminal epoxy groups and the amine or ammonium salt (D) has been added to these epoxy groups.

3. A binder as claimed in claim 1, in which the terminal epoxy groups which may be present on the reaction of (A), (B) and (C) have been opened up by reacting them, and the amine (D) has been added to some of the double bonds which stem from component (C).

4. A binder as claimed in claim 3, in which the epoxy groups have been opened up by reacting them with a carboxylic acid, an alcohol, a thio alcohol or a phenol.

5. A binder as claimed in claims 1 to 4, in which the compound used as component (C) was a mononuclear or binuclear phenol of the following formula

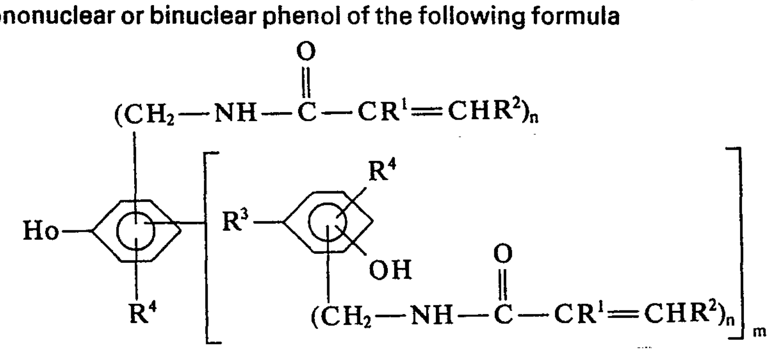

in which $R^1$ and $R^2$ are identical to or different from one another, and represent hydrogen or a methyl group, $R^3$ represents a straight-chain or branched divalent alkylene radical or represents $-SO_2-$, $-SO-$, $-S-$, $-CO-$ or $-O-$, $R^4$ represents hydrogen, a hydroxyl group or an alkyl radical, n = 1 to 3, and m = 0 or 1.

6. A binder as claimed in claims 1 to 5, in which an epoxy resin based on bisphenol A has been used as component A.

7. A binder as claimed in claims 1 to 5, in which a polyglycedyl ester has been used as component A.

8. A binder as claimed in claims 1 to 7, in which a diol or a dicarboxylic acid having a branched aliphatic chain has been used component B.

9. A binder as claimed in claims 1 to 8, in which a diol or a dicarboxylic acid having at least one neo structure has been used as component B.

10. A binder as claimed in claims 1 to 9, which contains 10—50% by weight, relative to the total binder, of component C.

11. A binder as claimed in claims 1 to 10, in which some ot the hydroxyl groups have been reacted with a partially blocked polyisocyanate which on average contains one free isocyanate group per molecule and whose blocked isocyanate groups are stable at room temperature.

12. A process for preparing a binder which is intended for cationic electropaints and is based on reaction products formed from modified epoxy resins and primary, secondary and/or tertiary amines and which can, if desired, also contain crosslinking agents, pigments, flow-control agents and other customary auxiliaries which comprises reacting

(A) low molecular weight epoxy resins which contain aromatic groups and have an epoxide equivalent weight of less than 375 with
(B) aliphatic and/or alicyclic polyfunctional alcohols or carboxylic acids having a molecular weight of less than 350 by addition to the epoxy group in such a way that the reaction products contain 10—45% of aromatic groups, calculated as the phenylene group, and have terminal epoxy groups.
(C) reacting the epoxy groups, and thus chain-lengthening, with the phenolic hydroxyl groups of a mononuclear or polynuclear phenol which has at least two phenolic hydroxyl groups and at least one $\alpha,\beta$-olefinically unsaturated amidomethyl group of the following formula

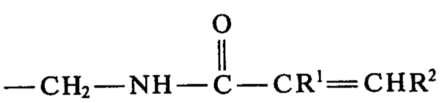

(I)

as a substituent on the aromatic ring(s) and in which $R^1$ and $R^2$ are identical to or different from one another and represent hydrogen or a methyl group, and
(D) reacting the intermediate product abtained from (A), (B) and (C) with a primary or secondary amine or an ammonium salt.

13. The process as claimed in claim 12, wherein the intermediate product of (A) and (B) with (C) is reacted in such a molar ratio that the resulting reaction product has terminal epoxy groups and the amine or ammonium salt (D) has been added to these epoxy groups.

14. The process as claimed in claim 12, in which the terminal epoxy groups which may be present on the reaction of (A), (B) and (C) are opened up by reacting them, and the amine (D) is added to some of the double bonds which stem from component (C).

15. The process as claimed in claim 14, wherein the epoxy groups are opened up by reacting them with a carboxylic acid, an alcohol, a thio alcohol or a phenol.

16. The process as claimed in claims 12 to 15, wherein the compound used as component (C) is a mononuclear or binuclear phenol of the following formula

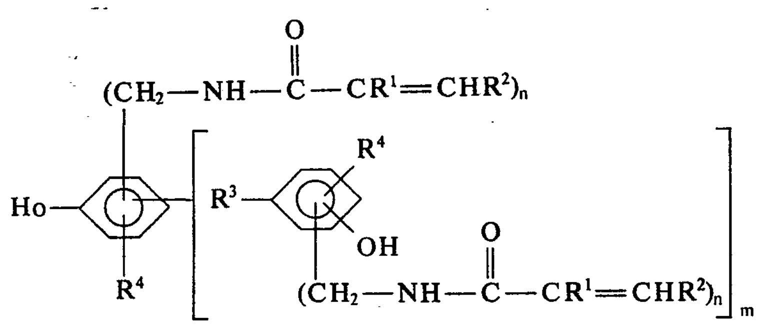

in which $R^1$ and $R^2$ are identical to or different from one another and represent hydrogen or a methyl group, $R^3$ represents a straight-chain or branched divalent alkylene radical or represents $-SO_2-$, $-SO-$, $-S-$, $-CO-$ or $-O-$, $R^4$ represents hydrogen, a hydroxyl group or an alkyl radical, $n = 1$ to 3, and $m = 0$ or 1.

17. The process as claimed in claims 12 to 16, wherein epoxy resins based on bisphenol A are used as component A.

18. The process as claimed in claims 12 to 16, wherein polyglycidyl esters are used as epoxy resins.

19. The process as claimed in claims 12 to 16, wherein a diol or dicarboxylic acid having a branched aliphatic chain in used as component B.

20. The process as claimed in claims 12 to 19, wherein a diol or dicarboxylic acid having at least one neo structure is used as component B.

21. The process as claimed in claims 12 to 20, wherein the component C content is 10—50% by weight, relative to the total binder.

22. The process as claimed in claims 12 to 21, wherein some of the hydroxyl groups of the reaction product of components A, B, C and D are reacted with a partially blocked isocyanate which on average contains one free isocyanate group per molecule and whose blocked isocyanate groups are stable at room temperature.

23. The use of a binder as claimed in claims 1 to 11, for electrocoating baths.

24. A process for the electrophoretic coating of an electrically conductive substrate which is connected as the cathode, from an aqueous bath based on cationic binders at least partially neutralized with acids, wherein the binders have been prepared by reacting

(A) low molecular weight epoxy resins which contain aromatic groups and have an epoxide equivalent weight of less than 375 with

(B) aliphatic and/or alicyclic polyfunctional alcohols or carboxylic acids having a molecular weight of less than 350 by addition to the epoxy group in such a way that the reaction products contain 10—45% of aromatic groups, calculated as the phenylene group, and have terminal epoxy groups.

(C) reacting the epoxy groups, and thus chain-lengthening, with the phenolic hydroxyl groups of a mononuclear or polynuclear phenol which has at least two phenolic hydroxyl groups and at least one $\alpha,\beta$-olefinically unsaturated amidomethyl group of the following formula

$$-CH_2-NH-\overset{\overset{\displaystyle O}{\|}}{C}-CR^1=CHR^2 \qquad (I)$$

as a substituent on the aromatic ring(s) and in which $R^1$ and $R^2$ are identical to or different from one another and represent hydrogen or a methyl group, and

(D) reacting the intermediate product obtained from (A), (B) and (C) with a primary or secondary amine or an ammonium salt.

25. The process as claimed in claim 24, wherein an epoxy resin based on bisphenol A has been used as component A in preparing the binders.

26. The process as claimed in claim 24, wherein a polyglycidyl ester has been used as component A in preparing the binders.

27. The process as claimed in claims 24 to 26, wherein a diol or a dicarboxylic acid having a branched aliphatic chain has been used as component B in preparing the binders.

28. The process as claimed in claims 24 to 27, wherein a diol or a dicarboxylic acid having at least one neo structure has been used as component B in preparing the binders.

29. The process as claimed in claims 24 to 28, wherein the component C content is 10—50% by weight, relative to the total binder.

**Revendications**

1. Liants dispersibles dans l'eau pour peintures électrophorétiques cationiques à base de produits de réaction de résines d'époxyde modifiées et d'amines primaires et/ou secondaires qui contiennent éventuellement des agents de réticulation, pigments, agents d'étalement et autres adjuvants usuels, caractérisés par le fait que les produits de réaction contenus sont des produits qui ont été préparés par réaction

(A) de résines d'époxide à bas poids moléculaire contenant des groupes aromatiques, ayant un poids équivalent époxyde inférieur à 375, sur

(B) des alcohols ou acides carboxyliques aliphatiques et/ou alicycliques polyfonctionnels d'un poids moléculaire inférieur à 350, avec addition au groupe époxyde de telle sorte que les produits de réaction contiennent une proportion de groupes aromatiques, calculés en groupe phénylène, de 10 à 45% et présentent des groupes époxydes terminaux,

(C) réaction supplémentaire des groupes époxydes, avec allongement de chaîne, sur les groupes hydroxyle phénoliques d'un phénol mono- ou polycyclique contenant au moins deux groupes hydroxyle phénoliques et au moins un groupe amidométhyle à insaturation oléfinique $\alpha,\beta$ de la formule générale suivante:

$$-CH_2-NH-\overset{O}{\overset{\|}{C}}-CR^1=CHR^2 \qquad (I)$$

comme substituant sur le ou les noyaux aromatiques, formule dans laquelle $R^1$ et $R^2$ sont semblables entre eux ou différents et représentent l'hydrogène ou un groupe méthyle, et

(D) réaction supplémentaire du produit intermédiaire obtenu en partent de (A), (B) et (C) sur une amine primaire ou secondaire ou un sel d'ammonium.

2. Liants selon la revendication 1, caractérisés par le fait que le produit intermédiaire tiré de (A) et (B) a été mis à réagir avec (C) en un rapport molaire tel que le produit de réaction obtenu contenait des groupes époxyde terminaux et que l'amine ou le sel d'ammonium (D) a été fixé par addition à ces groupes époxyde.

3. Liants selon la revendication 1, caractérisés par le fait que des groupes époxyde terminaux éventuellement présents du produit de réaction tiré de (A), (B) et (C) ont été ouverts par réaction et que l'amine (D) a été fixée par addition à une partie des doubles liaisons provenant du constituant (C).

4. Liants selon la revendication 3, caractérisé par le fait que les groupes époxyde ont été ouverts par réaction sur un axide carboxylique, un alcool, un thioalcool ou un phénol.

5. Liants selon l'une des revendications 1 à 4, caractérisés par le fait que comme constituant (C), on a utilisé un phénol mono- ou bicyclique de la formule générale suivante:

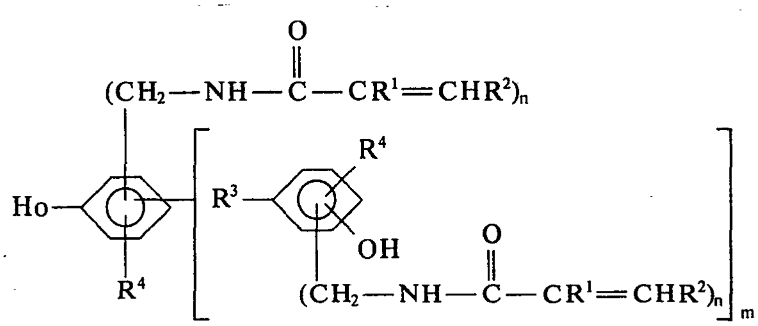

dans laquelle $R^1$ et $R^2$ sont semblables entre eux ou différents et représentent l'hydrogène ou un groupe méthyle, $R^3$ représente un radical alkylène divalent à chaîne droite ou ramifié ou représente $-SO_2-$, $-SO-$, $-S-$, $-CO-$ ou $-O-$, $R^4$ représente l'hydrogène, un groupe hydroxyle ou un radical alkyle, n = 1 à 3 et m = 0 ou 1.

6. Liants selon la revendications 1 à 5, caractérisés par le fait que comme constituant A, on a utilisé une résine d'époxide à base de bisphénol A.

7. Liants selon l'une des revendications 1 à 5, caractérisés par le fait que comme constituant A, on a utilisé un poly-(ester de glycidyle).

8. Liants selon l'une des revendications 1 à 7, caractérisés par le fait que comme constituants B, on a utilisé un diol ou un acide dicarboxylique ayant une chaîne aliphatique ramifiée.

9. Liants selon l'une des revendications 1 à 8, caractérisés par le fait que comme constituant B, on a utilisé un diol ou un acide dicarboxylique ayant au moins une structure »néo«.

10. Liants selon l'une des revendications 1 à 9, caractérisés par le fait que la proportion du constituant C est de 10 à 50% en poids, relativement à l'ensemble du liant.

11. Liants selon l'une des revendications 1 à 10, caractérisés par le fait que l'on a fait réagir une partie des groupes hydroxyle sur un polyisocyanate partiellement bloqué qui présente en moyenne un groupe isocyanate libre par molécule et dont les groupes isocyanate bloqués sont stables à la température ambiante.

12. Procédé de préparation de liants pour peinture électrophorétiques cationiques à base de produits de réaction de résines d'époxyde modifiées et d'amines primaires, secondaires et/ou tertiaires qui contiennent éventuellement des agents de réticulation, pigments, agents d'étalement et autres adjuvants usuals, caractérisé par le fait que l'on fait réagir

(A) des résines d'époxyde à bas poids moléculaire contenant des groupes aromatiques, ayant un poids équivalent époxyde inférieur à 375, sur

(B) des alcools ou acides carboxyliques aliphatiques et/ou alicycliques polyfonctionnels d'un poids moléculaire inférieur à 350, avec addition sur le groupe époxyde de telle sorte que les produits de réaction contiennent une proportion de groupes aromatiques, calculés en groupe phénylène, de 10 à 45% et présentent des groupes époxydes terminaux,

(C) que l'on fait réagir en outre les groupes époxydes, avec allongement de chaîne, sur les groupes hydroxyle phénolyques d'un phénol mono- ou polycyclique contenant au moins deux groupes hydroxyle phénolyques et au moins un groupe amidométhyle à insaturation oléfinique $\alpha,\beta$ de la formule générale suivante:

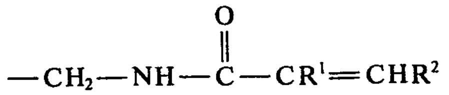

(I)

comme substituant sur le ou les noyaux aromatiques, formule dans laquelle $R^1$ et $R^2$ sont semblables entre eux ou différents et représentent l'hydrogène ou un groupe méthyle,

(D) que l'on fait réagir une amine primaire ou secondaire ou un sel d'ammonium sur le produit intermédiaire obtenu en partant de (A), (B) et (C).

13. Procédé selon la revendication 12, caractérisé par le fait que l'on fait réagir le produit intermédiaire tiré de (A) et (B) sur (C) en un rapport molaire tel que le produit de réaction obtenu présente des groupes époxyde terminaux et que l'on fixe par addition l'amine ou le sel d'ammonium (D) sur ces groupes époxyde.

14. Procédé selon la revendication 12, caractérisé par le fait que l'on ouvre par réaction des groupes époxyde terminaux éventuellement présents du produit de réaction tiré de (A), (B) et (C) et que l'on fixe l'amine (D) sur une partie des doubles liaisons provenant du constituant (C).

15. Procédé selon la revendication 14, caractérisé par le fait que l'on ouvre les groupes époxyde par réaction sur un acide carboxylique, un alcool, un thioalcool ou un phénol.

16. Procédé selon l'une des revendications 12 à 15, caractérisé par le fait que l'on utilise comme constituant (C) un phénol mono- ou bicyclique de la formule générale suivante:

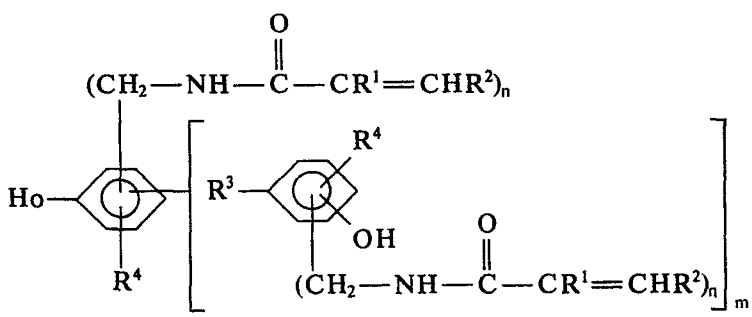

dans laquelle $R^1$ et $R^2$ sont semblables entre-eux ou différents et représentent l'hydrogène ou un groupe méthyle, $R^3$ représente un radical alkylène divalent à chaîne droite ou ramifiée ou représente $-SO_2-$, $-SO-$, $-S-$, $-CO-$ ou $-O-$, $R^4$ représente l'hydrogène, un groupe hydroxyle ou un radical alkyle, $n = 1$ à 3 et $m = 0$ ou 1.

17. Procédé selon l'une des revendications 12 à 16, caractérisé par le fait que comme constituant A, on utilise des résines d'époxyde à base de bisphénol A.

18. Procédé selon l'une des revendications 12 à 16, caractérisé par le fait que comme résines d'époxyde, on utilise des poly-(esters de glycidyle).

19. Procédé selon l'une des revendications 12 à 16, caractérisé par le fait que comme constituant B, on utilise un diol ou un acide carboxylique ayant une chaîne aliphatique ramifiée.

20. Procédé selon l'une des revendications 12 à 19, caractérisé par le fait que comme constituant B, on utilise un diol ou un acide carboxylique ayant au moins une structure »néo«.

21. Procédé selon l'une des revendications 12 à 20, caractérisé par le fait que la proportion du constituant C est de 10 à 50% en poids relativement à l'ensemble du liant.

22. Procédé selon l'une des revendications 12 à 21, caractérisé par le fait que l'on fait réagir une partie des groupes hydroxyle du produit de réaction des constituants A, B, C et D sur un polyisocyanate partiellement bloqué qui présente en moyenne un groupe isocyanate libre par molécule et dont les groupes isocyanate bloqués sont stables à la température ambiante.

23. Utilisation des liants selon l'une des revendications 1 à 11 pour des bains d'électrophorèse.

24. Procédé de revêtement électrophorétique d'un substrat conducteur de l'électricité branché comme cathode, en partant d'un bain aqueux à base de liants cationiques au moins partiellement neutralisés par des acides, caractérisé par le fait que l'on a préparé les liants en faisant réagir

(A) des résines d'époxyde à bas poids moléculaire contenant des groupes aromatiques, ayant un poids équivalent époxyde inférieur à 375, sur

(B) des alcools ou acides carboxyliques aliphatiques et/ou alicycliques polyfonctionnels d'un poids moléculaire inférieur à 350, avec addition sur le groupe époxyde, de telle sorte que les produits de

réaction contiennent une proportion de groupes aromatiques, calculés en groupe phénylène, de 10 à 45% et présentent des groupes époxyde terminaux,

(C) en faisant réagir en outre les groupes époxyde, avec allongement de chaîne, sur les groupes hydroxyle phénoliques d'un phénol mono- ou polycyclique contenant au moins deux groupes hydroxyle phénolique et au moins un groupe amidométhyle à insaturation oléfinique $\alpha,\beta$ de la formule générale suivante:

$$-CH_2-NH-\overset{\displaystyle O}{\overset{\|}{C}}-CR^1{=}CHR^2 \qquad (I)$$

comme substituent sur le ou les noyaux aromatiques, formule dans laquelle $R^1$ et $R^2$ sont semblables entre eux ou différents et représentent l'hydrogène ou un groupe méthyle et

(D) en faisant réagir en outre le produit intermédiaire obtenu en partant de (A), (B) et (C) sur une amine primaire ou secondaire ou un sel d'ammonium.

25. Procédé de revêtement selon la revendication 24, caractérisé par le fait que pour la préparation des liants, on a utilisé comme constituant A une résine d'époxyde à base de bisphénol A.

26. Procédé de revêtement selon la revendication 24, caractérisé par le fait que pour la préparation des liants, on a utilisé comme constituant A un poly-(ester de glycidyle).

27. Procédé de revêtement selon l'une des revendications 24 à 26, caractérisé par le fait que pour la préparation des liants, on a utilisé comme constituant B un diol ou un acide carboxylique ayant une chaîne aliphatique ramifiée.

28. Procédé de revêtement selon l'une des revendications 24 à 27, caractérisé par le fait que pour la préparation des liants, on a utilisé comme constituant B un diol ou un acide carboxylique ayant au moins une structure »néo«.

29. Procédé de revêtement selon l'une des revendications 24 à 28, caractérisé par le fait que la proportion du constituant C est de 10 à 50% en poids relativement à l'ensemble du liant.